# EUROPEAN PATENT SPECIFICATION

(11) **EP 4 176 995 B1**
(45) Date of publication and mention of the grant of the patent: **17.04.2024**
(21) Application number: 22178065.3
(22) Date of filing: 09.06.2022
(51) Int. Cl.: B23F 13/06, B23F 23/00

(54) **APPARATUS FOR MACHINING DOUBLE ENVELOPING WORM SHAFT**
VORRICHTUNG ZUR BEARBEITUNG EINER SCHNECKENWELLE MIT DOPPELTER UMHÜLLUNG
APPAREIL D'USINAGE D'ARBRE À VIS SANS FIN ET DOUBLE ENVELOPPE

(30) Priority: 04.11.2021 KR 20210150614
(43) Date of publication of application: 10.05.2023
(73) Proprietor: Han, Gyu-Bong, Gyeonggi-do 14470 (KR); Sung Jin Tech Co., Ltd., Gyeonggi-do 14454 (KR)
(72) Inventor: HAN, Gyu-Bong, Bucheon-si, Gyeonggi-do 14470 (KR)
(74) Representative: Viering, Jentschura & Partner mbB Patent- und Rechtsanwälte

(56) References cited:
- CN-A- 104 607 701
- JP-A- S63 127 867
- KR-A- 20120 008 717
- KR-A- 20200 000 189

## Description

### BACKGROUND

### 1. Field of the Invention

The present disclosure relates to an apparatus according to the preamble of claim 1 for machining a double enveloping worm shaft, and more particularly, to an apparatus for machining a double enveloping worm shaft which forms threads by cutting and machining a workpiece having a double enveloping body having a central portion formed therein in a concave arc-shaped outer circumferential surface and in which teeth of the machined double enveloping worm shaft are cut to a uniform depth while being always directed toward a central axis of a worm wheel so as to increase machining precision of the double enveloping worm shaft so that post-machining is not required.

### 2. Discussion of Related Art

Unlike most general gears, worm gears transfer forces while worm shafts rotate and slide on tooth surfaces of worm wheels and are used when two shafts are orthogonal to each other.

Since the worm gears can achieve a large gear ratio of 10:1 or more, the design of a device that requires the use of a plurality of gear sets can be simplified, and thus the worm gears are used as power transmission units (reducers) of various devices. However, in the case of general worm gears according to the related art, since a thread of the worm shaft has a cylindrical structure, there are disadvantages in terms of heat generation and low efficiency due to contact between the worm wheels and the small tooth surfaces.

Double enveloping worm shaft gears have been developed to address this problem.

A double enveloping worm shaft gear is a worm shaft gear which uses a worm shaft having a double enveloping threaded part instead of a cylindrical threaded part according to the related art.

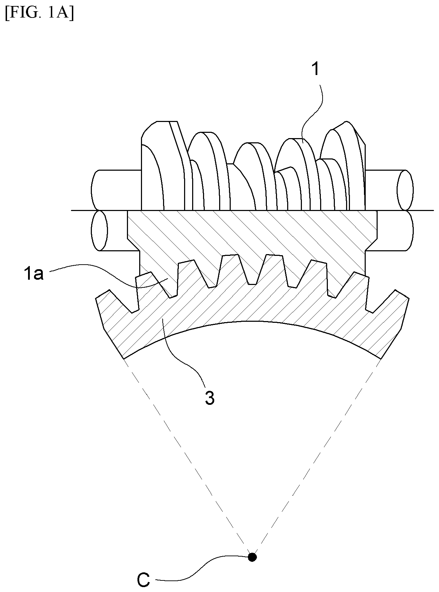

In detail, as illustrated in FIG. 1A, a double enveloping worm shaft is configured such that a tooth shape of a thread 1a is formed in a concave double enveloping body of which the outer diameter is gradually decreased toward a central portion in a lengthwise direction. Unlike a general cylindrical worm shaft that makes point or line contact, the thread 1a of the double enveloping worm shaft 1 has a structure surrounding a gear part of the worm wheel 3. As a contact area for the gear part of the worm wheel is significantly increased as compared to the general cylindrical worm shaft, lubricity is increased through a dispersion of force, heat generation is reduced, noise and vibrations are minimized, and thus excellent durability is ensured while energy consumption is reduced.

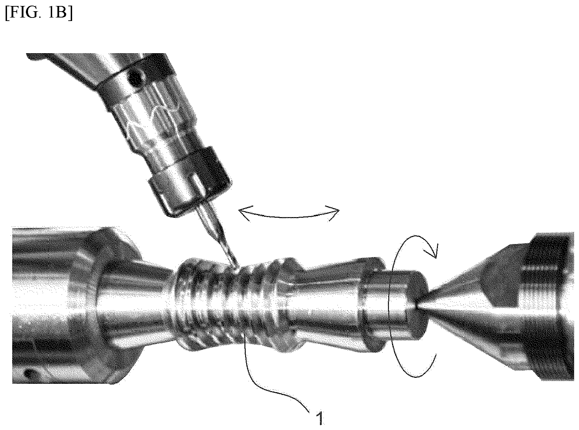

Due to the above advantages, the demand for the double enveloping worm shaft (worm gear) is increasing. However, in the case of a method of machining the double enveloping worm gear according to the related art, as illustrated in FIG. 1B, as a cutter cuts a rotating workpiece while moving, the double enveloping worm shaft 1 is machined. Thus, there is a problem that as an orientation of the tooth shape is not directed toward the center of the worm wheel, a contact surface with the worm wheel is not uniform or additional post-machining should be performed to uniformly make the contact surface.

In order to address this problem, a technology (hereinafter, referred to as the related art) of cutting and machining a double enveloping threaded part while a cutter rotates in a circular arc with respect to a workpiece as in KR 2016 0028198 A and KR 2020 0034181 A is presented as a device for machining a double enveloping worm shaft.

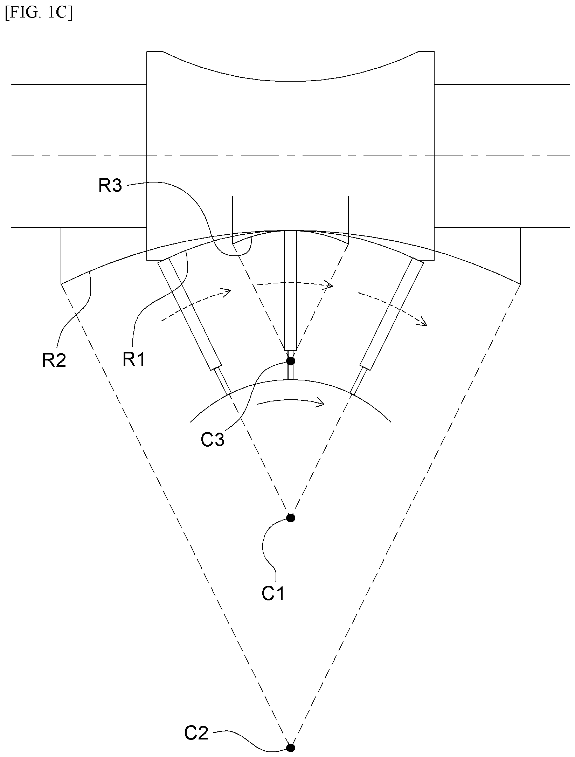

In the related art, as illustrated in FIG. 1C, as a rotating body equipped with the cutter rotates about a central axis C1, the cutter rotates in a circular arc to cut and machine an outer surface of the double enveloping body to form a threaded part thereon.

However, the size of the double enveloping worm shaft varies greatly according to a gear ratio of the worm wheel.

Thus, as in the related art, when the double enveloping worm shaft is machined by the rotating cutter, the double enveloping worm shaft is machined while an orientation of the tooth shape is formed according to a rotational radius of the rotating cutter regardless of the curvature of the double enveloping worm shaft. Thus, when the worm shaft is actually engaged with the worm wheel, tooth surface contact between the double enveloping worm shaft and the worm wheel is not constant, and thus the advantages of the double enveloping worm shaft gear are reduced or post-machining should be added to prevent the reduction in the advantages.

That is, as illustrated in FIG. 1C, the curvature of the double enveloping threaded part varies according to the size (radius) of the worm wheel. In the related art, since the rotational radius of the cutter is always the same, the center of the cutter is always constant, and thus the orientation of the tooth shape is not aligned with the center of the worm wheel due to a difference between the curvature of the double enveloping threaded part and the rotational radius of the cutter.

In other words, in FIG. 1C, the locations of centers C1, C2, and C3 of the double enveloping threaded parts are different according to curvatures R1, R2, and R3 thereof. In the related art, since the center C 1 of the rotational radius of the cutter is always constant, the machining precision of the double enveloping threaded part is degraded or the machining becomes impossible. Accordingly, in the related art, the difference is compensated for by adjusting the location of the cutter in a front-rear direction according to the curvature of the double enveloping threaded part. However, even in this case, since the actual rotational radius of the cutter is always constant, as the orientation of the tooth shape is aligned with the rotational center of the cutter rather than the center of the worm wheel, the cutting depth is changed, and thus the machining precision is inevitably degraded. In fact, in double enveloping worm shaft gear machining companies, the double enveloping worm shaft is precisely engaged with the worm wheel through post-machining, and thus machining precision and productivity are degraded.

From each of CN 104 607 701 A, which is considered as the closest prior art document for the subject matter of claim 1, and KR 2020 0000189 A a NC machine tool for machining a workpiece using a milling cutter, a bed and an alignment unit is known.

Further, from KR 2012 0008717 A a bed which can be rotated and on which a workpiece is mountable is known.

### SUMMARY OF THE INVENTION

The present disclosure is directed to providing an apparatus for machining a double enveloping warm shaft, in which, when a double enveloping worm shaft is machined, a cutting depth is formed uniformly as all orientations of teeth are formed uniformly toward a center of a worm wheel, and thus machining precision is increased, and thus productivity can be improved without additional post-machining.

The present invention provides an apparatus for machining a double enveloping worm shaft with the features according to claim 1. Further embodiments of the apparatus are described in the dependent claims.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1A is a cross-sectional view of a main part for describing a double enveloping worm shaft;
FIGS. 1B and 1C are views for describing an apparatus for machining a double enveloping worm shaft according to a related art;
FIGS. 2A to 2C are sample photographs of an apparatus for machining a double enveloping worm shaft according to the present disclosure;
FIG. 3 is a schematic plan view illustrating the present disclosure;
FIG. 4 is a cross-sectional view illustrating a main part of a worm gear of a rotation unit according to the present disclosure; and
FIG. 5 is a schematic front view illustrating an angle change of a cutter according to the present disclosure.

### DETAILED DESCRIPTION OF EXEMPLARY EMBODIMENTS

In each drawing, the same reference numerals, particularly, the same reference numerals having the same ten digit and the same one digit or having the same ten digit, the same one digit, and the same alphabet indicate members having the same or similar functions, and unless otherwise described, the member indicated by each reference sign in the drawings may be understood as a member conforming to these standards.

Further, in each drawing, the sizes or thicknesses of components are expressed to be exaggeratedly large (or thick) or small (or thin) or are expressed to be simplified in consideration of convenience of understanding, but the protection range of the present disclosure should not be interpreted as being limited to this expression.

Terms used herein are merely used to describe a specific implementation (an aspect)(or an embodiment) and are not intended to limit the present disclosure. Singular expressions include plural expressions unless clearly otherwise indicated in the context.

It should be understood in the present application that terms such as "include" or "have" are intended to indicate that there are features, numbers, steps, operations, components, parts, or combinations thereof that are described in the specification and do not exclude in advance the possibility of the presence or addition of one or more other features, numbers, steps, operations, components, parts, or combinations thereof.

Unless otherwise defined, all terms used herein including technical or scientific terms have the same meanings as those commonly understood by those skilled in the art to which the present disclosure belongs. Terms defined in commonly used dictionaries should be interpreted as having the same meanings in the context of the related art and may not be interpreted with ideal or excessively formal meanings, unless explicitly defined in the present application.

Terms such as "first" and "second" described herein are merely indicated to distinguish different components from each other and are not limited to a manufacturing order, and names thereof may not coincide with each other in the detailed description and the appended claims.

In a description of an apparatus for machining a double enveloping worm shaft according to the present disclosure, for convenience, when an approximate direction standard that is not strict is specified with reference to FIG. 1, an upper side, a lower side, a left side, and a right side are determined with reference to a visible direction when a direction of gravity is taken as a lower side. In the detailed description and the appended claims related to the other drawings, the directions are specifically described according to this standard unless otherwise described.

Hereinafter, an apparatus for machining a double enveloping worm shaft according to the present disclosure will be described with reference to the accompanying drawings.

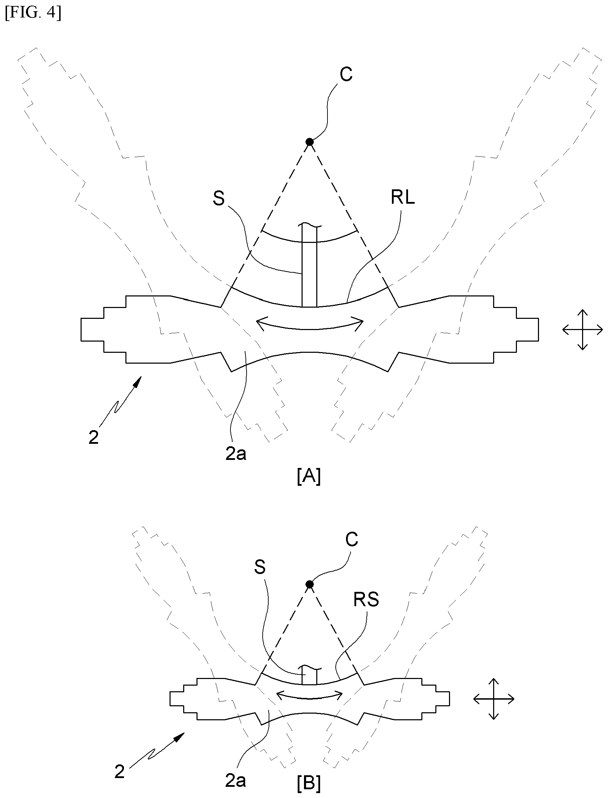

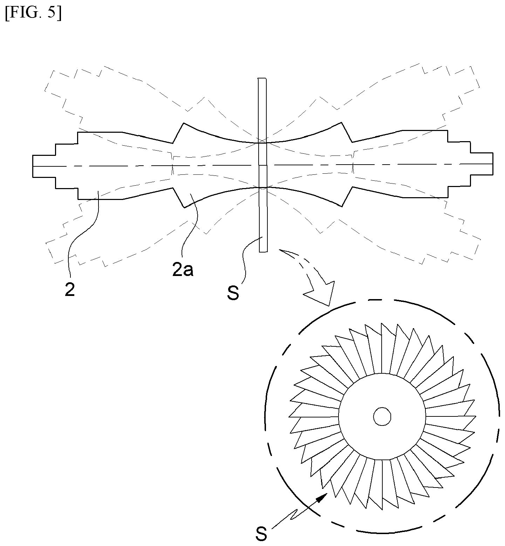

The present disclosure relates to the apparatus for machining a double enveloping worm shaft that roughly includes a bed 10, a rotation unit 20, an alignment unit 30, a cutter, and an angle changing unit 40 as shown in FIGS. 1 to 5.

In detail, the present disclosure includes the bed 10 provided with a main shaft 11 for rotating a workpiece 2 having a double enveloping body 2a and a tailstock 12 for fixing the workpiece 2 to the main shaft 11, the rotation unit 20 provided with a rotation table 21 which may rotate in a left-right direction and on which the bed 10 is mounted, the alignment unit 30 for moving the bed 10 in a front-rear direction and the left-right direction so that a circular arc cutting surface of the double enveloping body 2a is disposed in a concentric circle structure with a rotational path of the rotation table 21 in reference to a central point of the rotation table 21, and a cutter fixed to a central side of the rotation table 21 to face the circular arc cutting surface of the double enveloping body 2a, wherein, while the workpiece 2 revolves at an outer edge of the cutter, a thread of the double enveloping worm shaft 1 is machined in the circular arc cutting surface of the double enveloping body 2a.

In the workpiece 2, the double enveloping body 2a having a constant curvature is machined to have an initial double enveloping shape through milling in advance.

The bed 10 is movable in the front-rear direction and the left-right direction on an upper surface of the rotation unit 20, and the main shaft 11 for rotating the workpiece 2 and the tailstock 12 for fixing the workpiece 2 to correspond to the main shaft 11 are provided on both sides of an upper surface of the bed 10.

The main shaft 11 clamps one end of the workpiece 2 to rotate the workpiece 2 about a lengthwise axis thereof, and a motor omitted from the drawings is connected to an input shaft 13 connected with the main shaft 11 through gears so that the main shaft 11 rotates.

The tailstock 12 may move forward or rearward in a lengthwise direction of the workpiece 2 with respect to the main shaft 11 and supports a central point of the other end of the workpiece 2.

An embodiment in which the tailstock 12 is provided in a block that deviates from a line collinear with the main shaft 11 may be identified in the drawing. However, it is apparent that the main shaft 11 and the block in which the tailstock 12 is provided are collinearly arranged as in a tailstock applied to a metal machining facility such as a hobbing machine according to the related art.

In this case, although not illustrated in the drawings, the main shaft 11 and the tailstock 12 may be provided to move forward or rearward in the lengthwise direction of the workpiece 2 in the bed 10.

The rotation unit 20 is coupled to the rotation table 21 so that the rotation table 21 rotates in a left-right horizontal direction above a fixing table 22 and includes a worm gear provided inside the rotation table 21.

The worm gear includes a worm shaft 23 rotated by the motor and a worm wheel 24 coupled to the rotation table 21 and engaged with the worm shaft 23.

An embodiment in which a reduction gear unit 25 including spur gears 25a is provided between the input shaft 13 and the worm shaft 23, and the main shaft 11 and the rotation table 21 are controlled and rotated in conjunction with each other due to a rotational force of the motor supplied to the input shaft 13 may be identified in the drawing. Unlike the drawings, a separate servo motor may be connected to each of the main shaft 11 (the input shaft 13) and the worm shaft 23 to individually control the rotation of the main shaft 11 and the worm shaft 23 in a numerical control manner.

However, since speeds of self-rotation (rotation) and rotational movement (revolution) of the workpiece 2 should be matched at a constant ratio according to a lead value of the double enveloping worm shaft 1, rotational speeds of the main shaft 11 and the rotation table 21 may be simultaneously controlled through changing a gear ratio of the reduction gear unit 25.

In this case, the gear ratio of the reduction gear unit 25 is adjusted according to a reduction ratio of the double enveloping worm shaft gear.

For example, when the double enveloping worm shaft gear having a reduction ratio of 20:1 is machined, and when a worm gear reduction ratio of the rotation table 21 is 90:1, the reduction gear unit 25 is set to have a reduction ratio of 4.5:1 and thus the main shaft 11 and the rotation table 21 are connected to rotate in conjunction with each other.

Further, by applying a split clutch (not illustrated) to a gear connected to the input shaft 13 of the main shaft 11, the interlocking rotation of the main shaft 11 and the rotation table 21 is individually controlled according to the number of thread lines of the double enveloping worm shaft 1.

For example, when the double enveloping worm shaft 1 has one line thread, the clutch is not used, and when the double enveloping worm shaft 1 has two line threads, the clutch is divided by 180 degrees so that only the main shaft 11 may rotate. In addition, when the double enveloping worm shaft 1 has three line threads or four line threads, the split clutch may be configured by applying operation thereof.

In addition, the input shaft 13 is provided with a manual rotation handle which may be used to rotate the rotation table 21 to a predetermined location during setting before machining.

The alignment unit 30 is sufficient as long as the alignment unit 30 fixes the bed 10 after moving the bed 10 in the front-rear direction and the left-right direction, and there is no limitation in the fixing method.

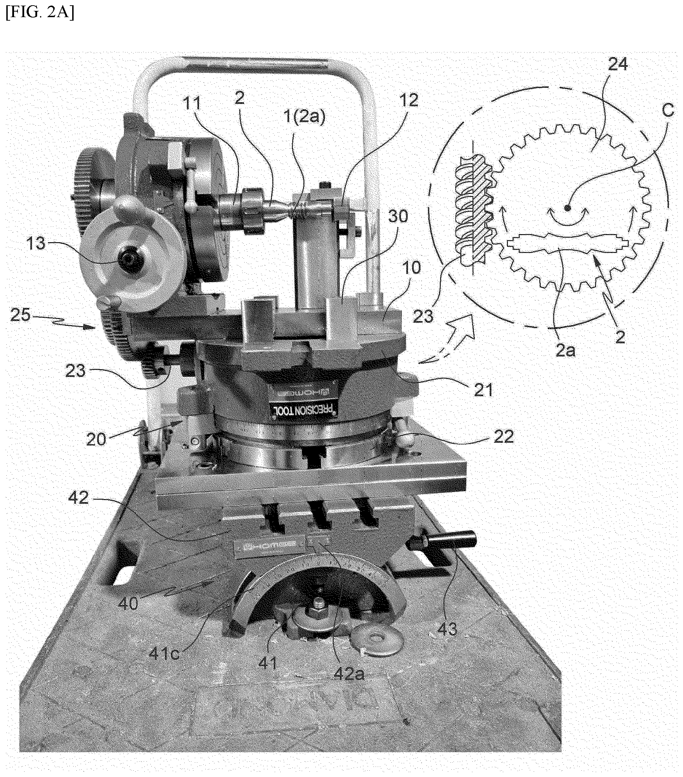

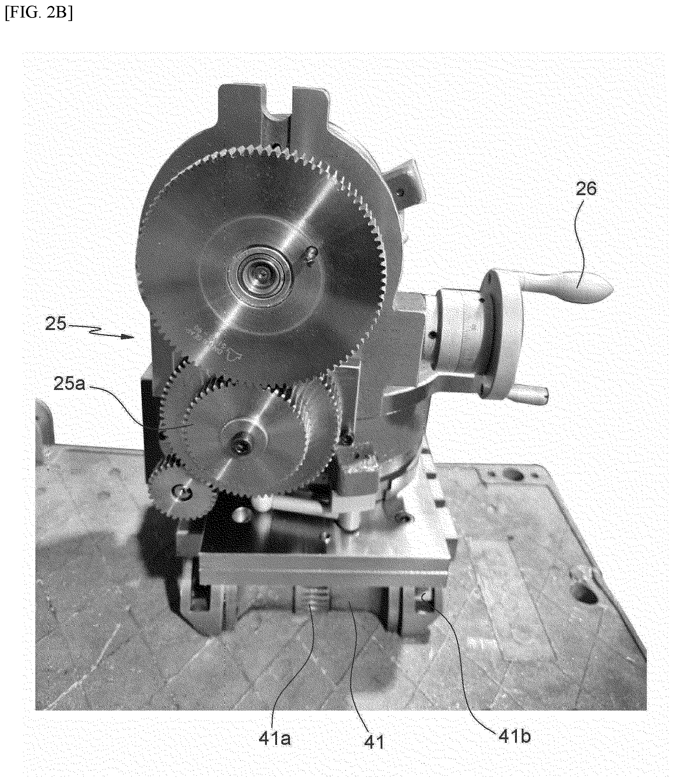

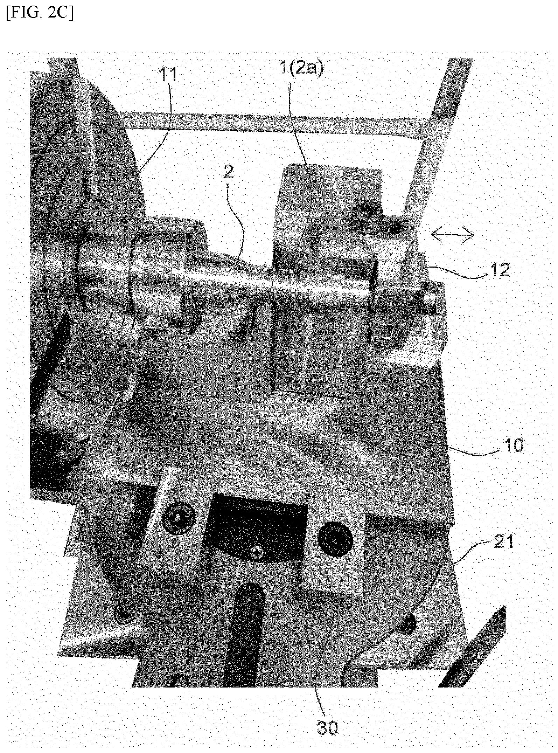

That is, FIGS. 2A to 2C are photograph diagrams of samples for a test operation before the present disclosure is applied to a machine or the like, and the alignment unit 30 including a clamp-type fixing block is representatively illustrated, but the present disclosure is not limited thereto (for example, the location of the bed 10 may be adjusted and fixed using a coordinate movement table of the machine itself.).

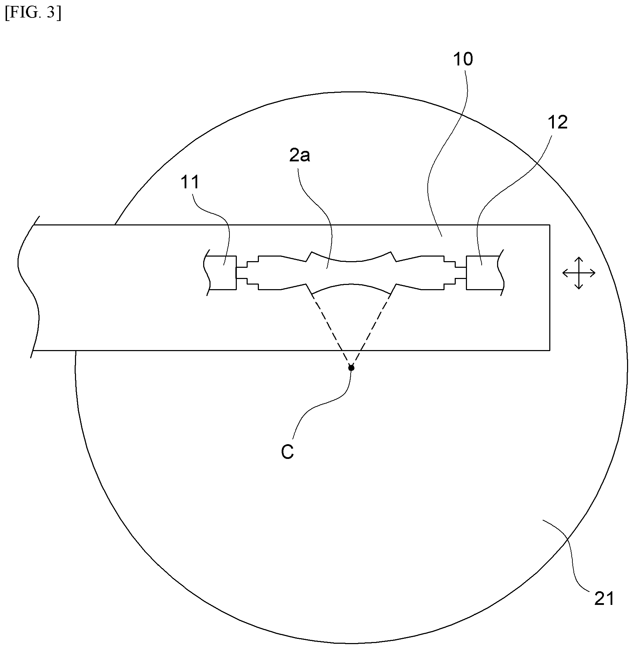

In this case, as illustrated in FIG. 3, by calculating the radius of curvature of the double enveloping body 2a, the bed 10 is set so that the workpiece 2 is spaced apart from a center of the rotation table 21 with the same radial distance.

The cutter is a component for forming a thread by cutting an outer peripheral surface of the double enveloping body 2a, a widely known metal cutting cutter is used as the cutter, and a circular saw blade cutter S according to the invention is illustrated in the drawings.

The circular saw blade cutter S is installed on a separate fixing shaft and performs the cutting while rotating by the motor. In this case, the circular saw blade cutter S is mounted to stand in line with the center of the rotation table 21 and is fixed so that a distal end of the circular saw blade cutter S is located on a rotation path of the workpiece 2. An accurate setting location of the cutter is adjusted according to the depth of a valley of the thread of the double enveloping worm shaft.

Next, the angle changing unit 40 is provided below the rotation unit 20 and rotates the rotation unit 20 in the left-right direction with respect to the cutter to change a mounting angle of the workpiece 2.

That is, the angle changing unit 40 changes the angle of the workpiece 2 so that the workpiece 2 is inclined to one side with respect to the cutter.

Through this, a lead angle (twisting angle) of the thread cut in the double enveloping body 2a may be adjusted according to a standard.

In detail, the angle changing unit 40 includes a base 41 that has a hemispherical worm wheel part 41a and a rotation block 42 that rotates while being axially coupled to the base 41, has an upper surface to which the rotation unit 20 is coupled, and includes a worm shaft part 42a engaged with the hemispherical worm wheel part 41a.

The base 41 has a hemispherical outer peripheral surface that is convex upward and has the hemispherical worm wheel part 41a formed in a central portion thereof.

The rotation block 42 rotates in the left-right direction while both front and rear ends thereof are axially installed on the base 41, and the worm shaft part 42a intersects and is engaged with an upper portion of the hemispherical worm wheel part 41a.

An embodiment in which the worm shaft part 42a rotates through a handle 43 may be identified in the drawing. However, it is apparent that a separate motor may be additionally connected to the worm shaft part 42a.

In addition, the base 41 is provided with guide grooves 41b in both front and rear ends to guide left-right rotation of the rotation block 42.

Further, the base 41 or the rotation block 42 is provided with a hemispherical goniometer 41c and an indicator 42b so that the angle of the rotation block 42, that is, the workpiece 2, can be accurately and visually identified and adjusted.

Unlike the worm shaft machining method according to the prior art, in the present disclosure having this configuration, while the workpiece 2 itself rotates (revolves) with respect to the fixed cutter according to the curvature of the worm wheel forming the double enveloping worm shaft gear, cutting of the thread is performed.

Thus, regardless of the double enveloping body 2a having a relatively large curvature RL or the double enveloping body 2a having a relatively small curvature RS, as the teeth of the thread 1a cut by the cutter are precisely aligned toward a center C of the worm wheel, the depth of cutting is uniformly formed, and thus machining precision is high. Accordingly, additional post-machining is unnecessary, and thus productivity can be improved.

Unlike a rotation-movement cutter cutting method, in the apparatus for machining a double enveloping worm shaft according to the present disclosure, a double enveloping worm shaft is cut and machined while a workpiece itself revolves according to the curvature of a worm wheel in a state in which a cutter is fixed, teeth of the double enveloping worm shaft are cut to a uniform depth while being always directed toward a central axis of a worm wheel, machining precision of the double enveloping worm shaft is increased, post-machining is not required, and thus productivity is excellent.

Rotational movement (revolution) of the workpiece can be precisely controlled using a worm gear.

A lead angle (a twisting angle) of a thread of the double enveloping worm shaft can be variously machined by changing an angle of the workpiece itself.

The lead angle of the double enveloping worm shaft can be precisely adjusted by changing an angle of the rotation unit using a hemispherical worm gear.

The rotational movement (revolution) and self-rotation (rotation) of the workpiece can be precisely controlled by adjusting a rotation reduction ratio of a main shaft and a rotation plate using one motor.

The rotation of the main shaft and the rotation plate is individually controlled using a clutch, and thus cutting and machining can be performed according to the number of thread lines of the double enveloping worm shaft.

## Claims

1. An apparatus for machining a double enveloping worm shaft, the apparatus comprising:
a bed (10) including a main shaft (11) for rotating a workpiece (2) having a double enveloping body (2a) and a tailstock (12) for fixing the workpiece (2) to the main shaft (11);
a rotation unit (20) provided with a rotation table (21) which rotates in a left-right direction and on which the bed (10) is mounted;
an alignment unit (30) for moving the bed (10) in the left-right direction so that a circular arc cutting surface of the double enveloping body (2a) is disposable in a concentric circle structure with a rotational path of the rotation table (21) with respect to a central point of the rotation table (21) and for fixing the bed (10) after moving; and
a cutter (S) installed on a separate fixing shaft and fixed to face the circular arc cutting surface of the double enveloping body (2a) so that a distal end of the cutter (S) is located on a rotation path of the workpiece (2),
wherein, in a state in which the circular arc cutting surface of the double enveloping body (2a) has the concentric circular structure with the rotation path of the rotation table (21) with respect to the central point of the rotation table (21), while the workpiece (2) revolves at an outer edge of cutter (S), a thread of the double enveloping worm shaft (1) is machined in the circular arc cutting surface of the double enveloping body (2a),
the apparatus is **characterised in that** the alignment unit is for additionally moving the bed in a front-rear direction, and **in that**
the cutter is a circular saw blade cutter mounted to stand in line with the center of the rotation table.

2. The apparatus of claim 1, wherein the rotation unit (20) includes a worm shaft (23) rotated by a motor and a worm wheel (24) coupled to the rotation table (21) and engaged with the worm shaft (23).

3. The apparatus of claim 1, further comprising an angle changing unit (40) which is provided below the rotation unit (20) and changes a mounting angle of the workpiece (2) as the rotation unit (20) rotates in the left-right direction with respect to the circular saw blade cutter (S).

4. The apparatus of claim 3, wherein the angle changing unit (40) includes a base (41) that has a hemispherical worm wheel part (41a) and a rotation block (42) that rotates while being axially coupled to the base (41), has an upper surface to which the rotation unit (20) is coupled, and includes a worm shaft part (42a) engaged with the hemispherical worm wheel part (41a).

## Patentansprüche

1. Vorrichtung zum Spanformen einer Globoidschneckenwelle, wobei die Vorrichtung aufweist:
ein Bett (10), aufweisend eine Hauptwelle (11) zum Drehen eines Werkstücks (2), das einen Globoidkörper (2a) hat, und einen Reitstock (12) zum Befestigen des Werkstücks (2) an der Hauptwelle (11),
eine Dreheinheit (20), die mit einem Drehtisch (21) bereitgestellt ist, der sich in einer Links-Rechts-Richtung dreht und auf dem das Bett (10) montiert ist,
eine Ausrichteinheit (30) zum Bewegen des Bettes (10) in der Links-Rechts-Richtung, so dass eine Kreisbogenschneidfläche des Globoidkörpers (2a) in einer konzentrischen Kreisstruktur mit einer Rotationsbahn des Drehtisches (21) in Bezug auf einen Mittelpunkt des Drehtisches (21) angeordnet werden kann, und zum Fixieren des Bettes (10) nach dem Bewegen, und
eine Schneidvorrichtung (S), die auf einer separaten Befestigungswelle installiert ist und befestigt ist, um der Kreisbogenschneidfläche des Globoidkörpers (2a) zugewandt zu sein, so dass ein distales Ende der Schneidvorrichtung (S) auf einer Rotationsbahn des Werkstücks (2) angeordnet ist,
wobei in einem Zustand, in dem die Kreisbogenschneidfläche des Globoidkörpers (2a) die konzentrische Kreisstruktur mit der Rotationsbahn des Drehtisches (21) in Bezug auf den Mittelpunkt des Drehtisches (21) hat, während sich das Werkstück (2) an einem Außenrand der Schneidvorrichtung (S) dreht, ein Gewinde der Globoidschneckenwelle (1) in der Kreisbogenschneidfläche des Doppelumhüllungskörpers (2a) spangeformt wird,
wobei die Vorrichtung **dadurch gekennzeichnet ist, dass** die Ausrichteinheit zum zusätzlichen Bewegen des Bettes in einer Vorwärts-Rückwärts-Richtung dient, und dass
die Schneidvorrichtung eine Kreissägeblatt-Schneidvorrichtung ist, die montiert ist, um in einer Linie mit der Mitte des Drehtisches zu stehen.

2. Vorrichtung gemäß Anspruch 1, wobei die Dreheinheit (20) eine Schneckenwelle (23), die von einem Motor gedreht wird, und ein Schneckenrad (24) aufweist, das mit dem Drehtisch (21) verbunden ist und mit der Schneckenwelle (23) in Eingriff steht.

3. Vorrichtung gemäß Anspruch 1, ferner aufweisend eine Winkeländerungseinheit (40), die unter der Dreheinheit (20) bereitgestellt ist und einen Montagewinkel des Werkstücks (2) ändert, wenn sich die Dreheinheit (20) in der Links-Rechts-Richtung in Bezug auf die Kreissägeblatt-Schneidvorrichtung (S) dreht.

4. Vorrichtung gemäß Anspruch 3, wobei die Winkeländerungseinheit (40) aufweist: eine Basis (41), die einen halbkugelförmigen Schneckenradteil (41a) hat, und einen Rotationsblock (42), der sich dreht, während er axial mit der Basis (41) verbunden ist, eine obere Fläche hat, mit der die Dreheinheit (20) verbunden ist, und einen Schneckenwellenteil (42a) aufweist, der mit dem halbkugelförmigen Schneckenradteil (41a) in Eingriff steht.

## Revendications

1. Appareil pour l'usinage d'un arbre à vis sans fin à double enveloppe, l'appareil comprenant :
un plateau (10) comprenant un arbre principal (11) pour la rotation d'une pièce à usiner (2) ayant un corps à double enveloppe (2a) et une contre-pointe (12) pour la fixation de la pièce à usiner (2) à l'arbre principal (11) ;
une unité de rotation (20) pourvue d'une table de rotation (21) qui tourne dans une direction gauche-droite et sur laquelle le plateau (10) est monté ;
une unité d'alignement (30) pour déplacer le plateau (10) dans la direction gauche-droite de sorte qu'une surface de coupe en arc de cercle du corps à double enveloppe (2a) peut être disposée dans une structure de cercle concentrique avec une trajectoire de rotation de la table de rotation (21) par rapport à un point central de la table de rotation (21) et pour fixer le plateau (10) après le déplacement ; et
un coupeur (S) installée sur un arbre de fixation séparé et fixé pour faire face à la surface de coupe en arc de cercle du corps à double enveloppe (2a) de manière à ce qu'une extrémité distale du coupeur (S) soit située sur une trajectoire de rotation de la pièce à usiner (2),
dans lequel, dans un état dans lequel la surface de coupe en arc de cercle du corps à double enveloppe (2a) a la structure circulaire concentrique avec la trajectoire de rotation de la table de rotation (21) par rapport au point central de la table de rotation (21), tandis que la pièce à usiner (2) tourne à un bord extérieur du coupeur (S), un filet de l'arbre à vis sans fin à double enveloppe (1) est usiné dans la surface de coupe en arc de cercle du corps à double enveloppe (2a),
dans lequel l'appareil est **caractérisé en ce que** l'unité d'alignement est destinée à déplacer en outre le plateau dans une direction avant-arrière, et **en ce que**
le coupeur est un coupeur à lame de scie circulaire monté de manière à être aligné sur le centre de la table de rotation.

2. Appareil selon la revendication 1, dans lequel l'unité de rotation (20) comprend un arbre à vis sans fin (23) tourné par un moteur et une roue à vis sans fin (24) couplée à la table de rotation (21) et en prise avec l'arbre à vis sans fin (23).

3. Appareil selon la revendication 1, comprenant en outre une unité de changement d'angle (40) qui est prévue sous l'unité de rotation (20) et qui modifie un angle de montage de la pièce à usiner (2) lorsque l'unité de rotation (20) tourne dans la direction gauche-droite par rapport au coupeur à lame de scie circulaire (S).

4. Appareil selon la revendication 3, dans lequel l'unité de changement d'angle (40) comprend une base (41) qui a une partie de roue à vis sans fin hémisphérique (41a) et un bloc de rotation (42) qui tourne tout en étant couplé axialement à la base (41), a une surface supérieure à laquelle l'unité de rotation (20) est couplée, et comprend une partie d'arbre à vis sans fin (42a) en prise avec la partie de roue à vis sans fin hémisphérique (41a).
